# EUROPÄISCHE PATENTSCHRIFT

(11) **EP 1 190 797 B1**
(45) Veröffentlichungstag und Bekanntmachung des Hinweises auf die Patenterteilung: **27.02.2008**
(21) Anmeldenummer: 01810890.2
(22) Anmeldetag: 14.09.2001
(51) Int. Cl.: B23B 51/02, E21B 10/44

(54) **Bohrwerkzeug**
Drilling tool
Outil de forage

(30) Priorität: 25.09.2000 DE 10047332
(43) Veröffentlichungstag der Anmeldung: 27.03.2002
(73) Patentinhaber: HILTI Aktiengesellschaft, 9494 Schaan (LI)
(72) Erfinder: Eichhorn, Jörg, 80935 München (DE)
(74) Vertreter: Wildi, Roland

(56) Entgegenhaltungen:
- EP-A- 0 685 629
- EP-A- 0 987 076
- WO-A-88/03849
- DE-A- 19 915 304
- DE-U- 8 536 123

## Beschreibung

Die Erfindung betrifft ein abrasiv Material abtragendes Werkzeug mit einem Wendel, insbesondere die geometrische Ausgestaltung der Wendelquerschnittsfläche des Wendels von Bohrern, Bohrmeisseln oder Fräsern, vorzugsweise zur Bearbeitung von Gestein.

Bohrer, Bohrmeissel und Fräser sind entlang ihrer Drehachse länglich ausgebildete Werkzeuge zum abrasiven Abtrag von Material. Dazu sind Bohrer und Bohrmeissel mit axialen Schneiden am Bohrkopf und Fräser mit radialen Schneiden am Fräskopf versehen. Der übliche Aufbau dieser Werkzeuge besteht längs der Drehachse an der einen Seite aus dem Werkzeugkopf mit den Schneiden zur Ausführung des abrasiven Materialabtrags und einem Einspannstück am anderen Ende zur form- oder kraftschlüssigen Verbindung mit der antreibenden Kraftmaschine. Der dazwischen liegende Teil wird üblicherweise als Wendel ausgebildet.

Die Drehbewegung des Werkzeugs entlang ihrer Drehachse oder optional zusätzlich axial schwingend verbunden mit einer axialen oder radialen Vorschubbewegung bewirkt den abrasiven Materialabtrag. Zum Abtransport des abgetragenen Materials aus den sich ausbildenden Löchern dient die wendelförmig ausgeführte Wendel, welche über die Drehbewegung des Werkzeugs verbunden mit der Trägheit des abgetragenen Materials und der radialen Lochwandung als axiale Förderschnecke wirkt. Dazu weisen die Wendel eine derartige radiale Dimensionierung auf, dass sie vermittelt über die Drehbewegung mit einem geringen Abstand zur Verhinderung einer übermässig hohen Reibung an der gesamten Lochwandung entlanggleiten und abgetragenes Material an dieser entlang im Wendelgang aus dem Loch heraus befördern. Insbesondere bei tiefen Löchern erfolgt durch derart dimensionierte Wendel über den Kontakt mit der Lochwandung eine Führung der Lage der Drehachse des Werkzeugs.

Die Wendel bekannter Bohrer, Bohrmeissel und Fräser sind ein-, zwei- oder mehrgängig ausgeführt und entsprechen bezüglich ihrer Anzahl üblicherweise der der Schneiden. Die Anordnung der einzelnen Wendelgänge im Wendelquerschnitt senkrecht zur Drehachse bei zwei- oder mehrgängigen Ausführungen ist derart symmetrisch, dass diese durch Drehung entlang der Drehachse ineinander überführt werden können, wobei sich der Drehwinkel aus dem der Anzahl der Wendel entsprechenden Teil des Vollkreises ergibt. Entsprechend weist eine zweigängige Ausführung eine zweizählige Rotationssymmetrie auf, eine dreigängige eine dreizählige usw. Bei Drehung des Werkzeuges um die Drehachse ergibt sich als Hüllkurve des Wendelquerschnitts ein Kreis etwa der Grösse des Lochdurchmessers bzw. als Hüllfläche des Wendels ein Zylinder.

Zur zweckentsprechenden Benutzung müssen die von der Maschine am Ende des Einspannstücks in das Werkzeug eingeleiteten Kräfte über die verbleibende Länge zum Werkzeugkopf übertragen werden, insbesondere auch über den Bereich, welcher als Wendel ausgebildet ist. Dabei überwiegen bei Bohrern und Fräsern mit einer Drehbewegung als Hauptlast die Torsionskräfte, bei Bohrmeisseln mit der zumeist schlagenden Schwingbewegung als Hauptlast die Normalkräfte in Form von Druckkräften. Bedingt durch äussere Zwänge, dem Eigengewicht der Maschine und der Führung des Werkzeugs im Loch sowie durch das Beulverhalten des Werkzeugs bei hohen axialen Druckkräften treten zusätzlich Biegekräfte auf.

Die dadurch hervorgerufenen Deformationen des Werkzeugs bestimmen sich, entsprechend gewichtet mit der Steifigkeitsverteilung des Werkzeugmaterials bezüglich des Wendelquerschnitts des Werkzeugs, über den Elastizitätsmodul und die geometrieabhängigen Flächenmomente. Durch die wendelförmige Ausgestaltung der Wendel um den zylinderförmigen Kernbereich herum bildet sich ein sehr komplexer Spannungs- und Deformationszustand aus. Der sich summarisch ergebende Spannungszustand kann jedoch näherungsweise entsprechend seiner einzelnen Komponenten entwickelt und separiert betrachtet werden. Die Normalkräfte werden von der gesamten Wendelquerschnittsfläche aufgenommen, wobei auf Grund der Verwindung des Wendels im wesentlichen nur der um die Drehachse ausgebildete Kernbereich zur Erzielung einer ausreichend hohen Stabilität beiträgt. Die Torsionskräfte hingegen werden im wesentlichen von den bezüglich des Flächenmittelpunktes radialen Randbereichen aufgenommen, welche die Wendel ausbilden. Die Biegekräfte werden abhängig von der äusseren Biegerichtung im wesentlichen von den senkrecht beabstandeten Randbereichen zur neutralen Faser dieser äusseren Biegerichtung aufgenommen.

Man kann zeigen, dass die betragsmässig kleinsten und grössten Biegewiderstandsmomente stets bezüglich zueinander senkrechter Achsen innerhalb des Wendelquerschnitts auftreten, welche somit ein Eigenkoordinatensystem dieses Wendelquerschnitts festlegen. Auf Grund der Verwindung des Wendels entlang der Drehachse nehmen über eine Periode betrachtet die Achsen aller Wendelquerschnitte jede zur Drehachse senkrechte Richtung im Raum ein, insbesondere auch die der aktuellen äusseren Biegerichtung. Demzufolge wird die Durchbiegung des Werkzeugs im wesentlichen von dem lokal kleinsten axialen Biegewiderstandsmoment bestimmt. Ein geringes Biegewiderstandsmoment führt zur verstärkten Ausbildung von Schwingungsbäuchen des sich drehenden Werkzeuges und zu einer relativ geringeren Biegefestigkeit des Werkzeugs. Zudem ist das Werkzeug bei axialer Druckbeanspruchung weniger stabil gegen Knicken.

Übliche Werkzeuge zur abrasiven Abtragung von Material und insbesondere die Ausgestaltung deren Wendel sind bspw. aus der Druckschrift EP0363734A2 vorbekannt. Insbesondere zeigt diese Druckschrift eine bezüglich der Förderung des abgetragenen Materials optimierte Variante eines zweigängigen Wendels, welcher eine zweizählige Rotationssymmetrie aufweist, mit längs der Drehachse unterschiedlichen Steigungswinkeln. Dieses Werkzeug ist besonders zur Bearbeitung von Gestein ausgelegt. Die Druckschrift EP0361189A1 zeigt ebenfalls eine Variante eines zweigängigen Wendels, welcher eine zweizählige Rotationssymmetrie aufweist, wobei der Wendel durch Verdrehen einer flachen Stange mit axialer Verstärkung fertigungstechnisch günstig hergestellt wurde.

Nach der EP0987076A2 weist die Wendel mit zwei unterschiedlich ausgestalteten Wendelgängen zwar keine ganzzählige Rotationssymmetrie auf, wohl aber eine Spiegelsymmetrie an einer Spiegelachse, die mittig durch die Wendelgänge verläuft.

Nachteilig bei den vorbekannten Werkzeugen mit der symmetrischen Ausgestaltung der Wendelgeometrie ist, dass bei gegebenem Hüll- bzw. Lochdurchmesser und gegebener Wendelquerschnittsfläche zur Aufnahme der Normalkraft bzw. gegebenem Freiraum zur Förderung des Materialabtrags keine optimale mittlere, über eine Wendelganghöhe betrachtet, Biegesteifigkeit des gesamten Werkzeugs erreicht wird, sondern periodische Schwankungen der Biegesteifigkeit auftreten. Dies führt zu störenden lateralen Schwingungen bei einem, einen Biegemoment ausübenden, Handwerkzeuggerät, wie einer Bohrmaschine.

Der Erfindung liegt die Aufgabe zugrunde, bei Werkzeugen zur abrasiven Abtragung von Material mit einem zwei- oder mehrgängigen Wendel, die Schwankungen der Biegesteifigkeit zu verringern.

Die Aufgabe wird durch die Merkmale der unabhängigen Patentansprüche gelöst. Vorteilhafte Weiterbildungen ergeben sich aus den Unteransprüchen.

Im wesentlichen wird bei einem zumindest teilweise drehenden Werkzeug mit zwei- und mehrgängigen Wendeln, die Wendelgeometrie bezüglich einer ganzzähligen Rotation asymmetrisch ausgeführt, wobei die Symmetrie bezüglich einer Spiegelung nicht entgegensteht, sowie derart dimensioniert, dass die beiden axialen Widerstandsmomente des Wendelquerschnitte im mit dem Wendel mitdrehenden lokalen Koordinatensystem im wesentlichen betragsmässig sind.

Durch die asymmetrische Ausführung wird bei gleicher Wendelquerschnittsfläche und gleichem Hüllkurvendurchmesser die Benachteiligung einer Flächenrichtung bezüglich einer Biegebeanspruchung vermieden. Da für die Biegesteifigkeit des Werkzeugs mit wendelförmig ausgeführtem Wendel das kleinste Biegewiderstandsmoment der Wendelquerschnittsfläche bestimmend ist, führt eine Erhöhung des kleinsten Biegewiderstandsmomentes durch asymmetrische Ausführung auch dann zu einer Erhöhung der Gesamtbiegesteifigkeit des Werkzeugs, wenn das grösste Biegewiderstandsmoment dadurch entsprechend verringert wird.

Da die Wendelquerschnittsfläche durch den Übergang in eine asymmetrische Ausführung unverändert bleibt, können die selben Normalkräfte übertragen werden, insbesondere bei Bohrmeisseln dieselbe Schlagkraft. Durch die ebenfalls gleichbleibende Restfläche bezüglich der Hüllkurve bleibt das Fördervolumen unverändert. Der Werkzeugkopf kann am freien Ende in üblicher Art symmetrisch ausgeführt sein, damit die Schneiden gleichmässig beansprucht werden. Dies ist insbesondere bei der Bearbeitung von hartem Material wie Gestein mit geringem Materialabtrag vorteilhaft.

Eine insbesondere bei weichem Material weitere vorteilhafte Ausführung ist die ebenfalls asymmetrische Ausführung der Querschnittsfläche des Werkzeugkopfes bzw. der den Wendelgängen zugeordneten Kopfnuten zur Gewährleistung eines optimalen Materialabtrags und deren Ausräumung aus dem Bereich des Werkzeugkopfes.

Die Erfindung wird nachfolgend anhand eines vorteilhaften Ausführungsbeispiels näher erläutert. Es zeigen:
Fig. 1: ein Werkzeug mit Wendel
Fig. 2: einen Schnitt aus Fig. 1 längs der Schnittlinie II - II
Fig. 3: einen Querschnitt gemäss dem Stand der Technik zur Gegenüberstellung
Fig. 4: ein weiteres Ausführungsbeispiel

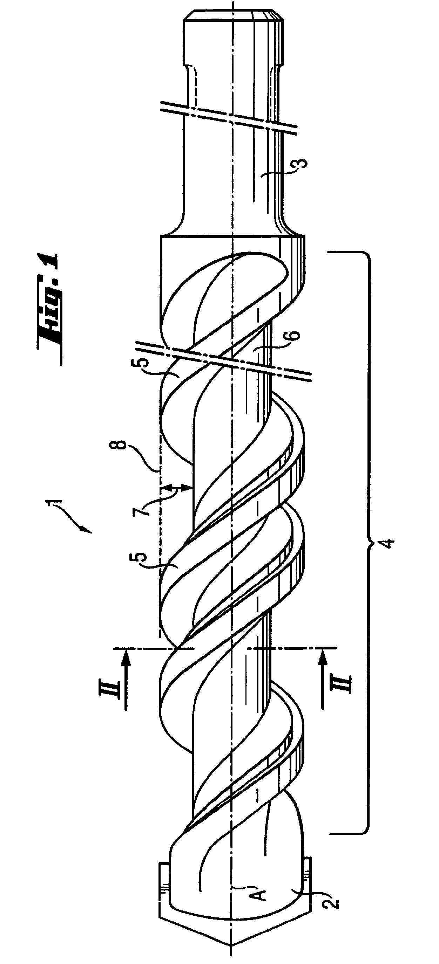

Nach Fig. 1 besteht ein längs seiner Drehachse A längliches Werkzeug 1 zum abrasiven Abtragen von Material aus einem Werkzeugkopf 2 an dem einen und einem Einspannstück 3 an dem gegenüberliegenden Ende, wobei dazwischen zumindest teilweise ein Wendel 4 ausgebildet ist, welcher zwei- oder mehrere Wendelgänge 5 aufweist, die sich wendelförmig um die Drehachse A erstrecken. Der Wendel 4 besteht aus einem zylindrischen zentralen Kernbereich 6 und zwei oder mehreren sich daran anschliessenden Wendelgängen 5, welche durch ihre radiale Ausdehnung eine Höhe 7 besitzen und bei Rotation um die Drehachse A eine Hüllkurve 8 ausbilden.

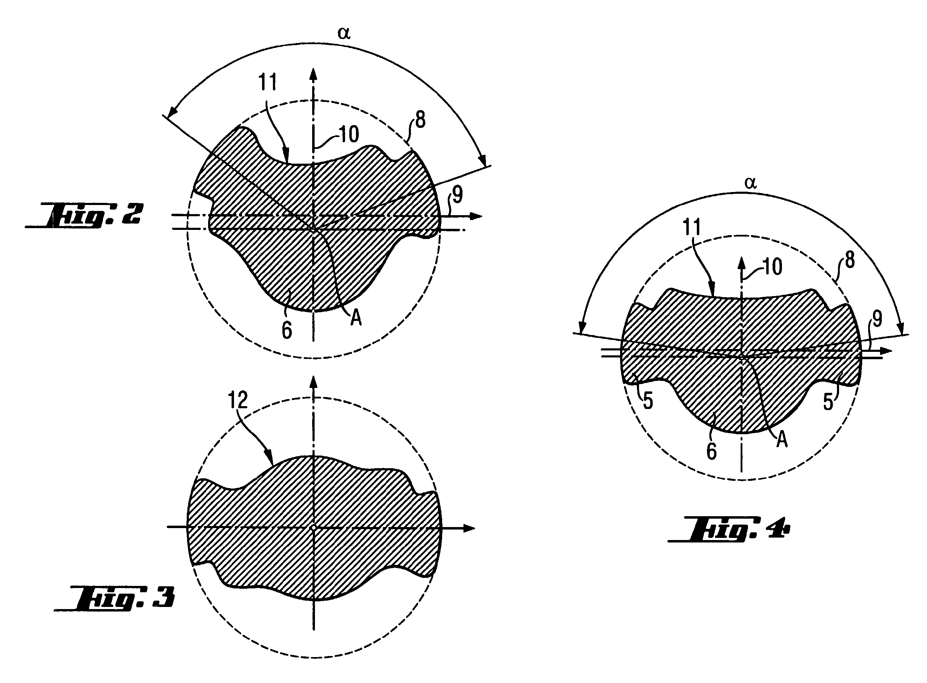

Nach Fig. 2 als Schnitt II - II aus Fig. 1 ist der über einen eingeschriebenen Kreis um die Drehachse A gebildete Kernbereich 6 umgeben von der Hüllkurve 8, wobei die Wendelgänge 5 bis zur Hüllkurve 8 heranreichen und zueinander im Winkelbereich α zwischen 120° und 179° angeordnet sind. Bezüglich der Achsen 9, 10 eines orthogonalen Eigenkoordinatensystems mit Ursprung im Flächenmittelpunkt ergeben sich die minimalen und maximalen Biegewiderstandsmomente. Ein erfindungsgemässer Wendelquerschnitt 11 weist keine ganzzählige Rotationssymmetrie auf, lässt sich also nicht durch reine Drehung um die Drehachse A in sich selbst überführen. Fig. 4 zeigt ein weiteres Ausführungsbeispiel eines erfindungsgemässen Querschnittes.

Nach Fig. 3 (Stand der Technik) unterscheidet sich der erfindungsgemässe asymmetrische Wendelquerschnitt 11 von einem vorbekannten, bezüglich der Rotation symmetrischen Wendelquerschnitt 12 durch die beim asymmetrischen Wendelquerschnitt 11 nicht mehr vorhandene ganzzählige Rotationssymmetrie, da die benachbarten Wendelgänge untereinander jeweils andere Winkel ausbilden, bei einem zweigängigen Wendel einmal einen spitzen und einmal einen stumpfen Winkel. Bei der asymmetrischen Ausführung sind ersichtlich die Biegewiderstandsmomente der Wendelquerschnittsfläche untereinander vom Betrag vergleichbarer, was zwar zu einer Abnahme des grössten Biegewiderstandsmoments, aber auch zu der wichtigen Zunahme des kleinsten Biegewiderstandsmoments führt. Dadurch wird die mittlere Biegesteifigkeit des gesamten Wendels und somit des Werkzeugs sowie deren Biegefestigkeit erhöht, ohne dass die Wendelquerschnittsfläche oder die Hüllkurve geändert wurden.

## Patentansprüche

1. Werkzeug (1) zur abrasiven Abtragung von Material mit einem Werkzeugkopf (2), einem Einspannstück (3) und einem sich längs zur Drehachse (A) zumindest teilweise dazwischen erstreckenden Wendel (4), welcher mehrere Wendelgänge (5) aufweist, welche sich wendelförmig um die Drehachse (A) erstrecken, wobei der Wendel (4) aus einem die Drehachse (A) beinhaltenden zentralen Kernbereich (6) und zumindest einem sich daran anschliessenden bis zu einer Hüllkurve (8) erstreckenden Höhe (7) der Wendelgänge (5) besteht, wobei mindestens zwei Wendelgänge (5) vorhanden sind, bei denen der Wendelquerschnitt (11) keine ganzzählige Rotationssymmetrie aufweist, **dadurch gekennzeichnet, dass** die beiden, in einem mit dem Wendel (4) mitdrehenden lokalen Koordinatensystem, axialen Widerstandsmomente des Wendelquerschnitts (11) betrags gleich sind.

2. Wendel nach Anspruch 1, **dadurch gekennzeichnet, dass** der Wendel (4) zwei Wendelgänge (5) aufweist.

3. Wendel nach Anspruch 2, **dadurch gekennzeichnet, dass** bezüglich der Drehachse (A) die beiden Wendelgänge (5) einen Winkel im Bereich zwischen 120° und 179° einschliessen.

4. Wendel nach einem der vorhergehenden Ansprüche, **dadurch gekennzeichnet, dass** die Anordnung der Schneiden des Werkzeugkopfes (2) in der Ebene senkrecht zur Drehrichtung (A) keine ganzzählige Rotationsymmetrie aufweist.

## Claims

1. Drill bit (1) for the abrasive removal of material, with a tip (2), a chucking end (3), and a twist spiral (4) extending along the rotational axis (A) at least part-way between [the two ends of the bit] and comprising a number of turns [(lands)] (5) extending in a helix about the rotational axis (A), wherein the twist spiral (4) consists of a central core [(web]) (6) containing the rotational axis (A) and at least one [spiral turn] (5) adjoining [the said core, with a] height (7) reaching up to an envelope curve (8), [and] wherein at least two spiral turns (5) are present for which the spiral cross-section (11) does not possess whole-number rotational symmetry, **characterized in that** the two axial resistance moments of the spiral cross-section (11) in a local coordinate system co-rotating with the twist spiral (4) are of equal magnitude.

2. Twist spiral [*sic*] according to Claim 1, **characterized in that** the twist spiral (4) has two turns [(lands)] (5).

3. Twist spiral [*sic*] according to Claim 2, **characterized in that** the two spiral turns (5) include an angle with respect to the rotational axis (A) of between 120° and 179°.

4. Twist spiral [*sic*] according to any one of the preceding claims, **characterized in that** the arrangement of the cutting edges of the tip (2) does not possess whole-number rotational symmetry in the plane perpendicular to the rotational direction [*sic*] (A).

## Revendications

1. Outil (1) pour l'érosion abrasive de matière, comprenant une tête d'outil (2), une pièce de serrage (3) et une hélice (4) qui s'étend au moins partiellement entre celles-ci suivant l'axe de rotation (A) et qui comporte plusieurs filets hélicoïdaux (5) s'étendant en hélice autour de l'axe de rotation (A), l'hélice (4) étant constituée d'une zone de coeur centrale (6) contenant l'axe de rotation (A) et d'au moins un des filets hélicoïdaux qui s'y raccorde et qui s'étend jusqu'à une hauteur (7) atteignant une enveloppante (8), au moins deux filets hélicoïdaux (5) étant prévus et leur section d'hélice (11) ne présentant pas une symétrie de révolution en nombres entiers, **caractérisé en ce que** les deux moments de résistance axiale de la section d'hélice (11) dans un système de coordonnées locales entraîné en rotation avec l'hélice (4) sont de valeur égale.

2. Hélice selon la revendication 1, **caractérisée en ce que** l'hélice (4) comporte deux filets hélicoïdaux (5).

3. Hélice selon la revendication 2, **caractérisée en ce que**, par rapport à l'axe de rotation (A), les deux filets hélicoïdaux (5) forment un angle compris entre 120° et 179°.

4. Hélice selon une des revendications précédentes, **caractérisée en ce que** l'agencement de taillants de la tête d'outil (2) dans le plan perpendiculaire au sens de rotation (A) ne présente pas une symétrie de révolution en nombres entiers.
